# EUROPÄISCHE PATENTANMELDUNG

(11) **EP 1 672 360 A1**
(43) Veröffentlichungstag der Anmeldung: **21.06.2006**
(21) Anmeldenummer: 05027670.8
(22) Anmeldetag: 16.12.2005
(51) Int. Cl.: G01N 23/201, G01V 5/00

(54) **Anordnung zum Messen des Impulsübertragungsspektrums von elastisch gestreuten Röntgenquanten**

(30) Priorität: 16.12.2004 DE 102004060611
(71) Anmelder: GE Security Germany GmbH, 22453 Hamburg (DE)
(72) Erfinder: Harding, Geoffrey, Dr., 22547 Hamburg (DE)
(74) Vertreter: DTS München

(57) **Zusammenfassung**

Die Erfindung befasst sich mit einer Anordnung zum Messen des Impulsübertragungsspektrums von elastisch gestreuten Röntgenquanten mit einem in Y-Richtung ausgedehnten Fokus als Anode 1, der Röntgenstrahlung in X-Richtung emittiert; mit einem in y-Richtung sich erstreckenden Primärkollimator 4, der nur Röntgenquanten durchlässt, die auf einen einzigen Fokalpunkt 7 gerichtet sind und der Fokalpunkt 7 Ursprungspunkt eines kartesischen Koordinatensystems ist; mit einem Untersuchungsbereich; mit einem um die Z-Richtung ringförmig ausgebildeten Streukollimator, der zwischen dem Untersuchungsbereich und dem Fokalpunkt 7 angeordnet ist und der nur Streustrahlung 11 von einem in den Untersuchungsbereich einbringbaren Objekt 5 durchlässt, die unter einem festen Streuwinkel Θ emittiert wird; und mit einem Detektor 9. Erfindungsgemäß ist vorgesehen, dass sich der Detektor 9 in der YZ-Ebene befindet, einen Abstand zur Z-Achse aufweist und jedes Detektorelement 10 gekrümmt ausgebildet ist.

## Beschreibung

Die Erfindung befasst sich mit einer Anordnung zum Messen des Impulsübertragungsspektrums von elastisch gestreuten Röntgenquanten.

Aus der EP 1 241 470 B1 ist eine solche Anordnung zur Untersuchung von Gepäckstücken bekannt. Eine solche Anordnung weist einen in Y-Richtung ausgedehnten Fokus auf, der Röntgenstrahlung in X-Richtung emittiert. Durch einen sich in Y-Richtung erstreckenden Primärkollimator werden nur Röntgenquanten in einen dahinter liegenden Untersuchungsbereich durchgelassen, die auf einzigen Fokalpunkt gerichtet sind. Der Fokalpunkt bildet dabei den Ursprungspunkt eines kartesischen Koordinatensystems. Es wird somit ein scheibenförmiger inverser Fächerstrahl gebildet. Zwischen dem Fokalpunkt und dem Untersuchungsbereich ist ein Streukollimatorsystem angeordnet, das ringförmig um die Z-Richtung ausgebildet ist. Dadurch wird erreicht, dass nur Streustrahlung von einem in dem Untersuchungsbereich befindlichen Objekt durchgelassen wird, die unter einem festen vorgegebenen Streuwinkel vom Streuvoxel ausgeht. In der YZ-Ebene ist ein Detektor angeordnet, der sich entlang der Z-Achse erstreckt. Dadurch wird die Tiefeninformation des Streuvoxels, also seine X-Koordinate, auf eine Parallele zur Y-Achse in der YZ-Ebene abgebildet. Mittels einer solchen Anordnung kann eine schnelle Analyse eines Gepäckstücks erreicht werden, wobei lediglich eine eindimensionale Bewegung des Gepäckstücks entlang der Z-Richtung auf einem Förderband erfolgen muss. Die Scangeschwindigkeit ist allerdings durch die winkelabhängige Empfindlichkeit der Detektorelemente beschränkt.

Aufgabe der Erfindung ist es, eine Anordnung zur Verfügung zu stellen, die eine noch höhere Scangeschwindigkeit eines Objekts ermöglicht.

Die Aufgabe wird durch eine Anordnung mit den Merkmalen des Patentanspruchs 1 gelöst. Dadurch, dass jedes Detektorelement gekrümmt ausgebildet ist, kann die auf Grund der geometrischen Abbildungsvoraussetzungen nichtlineare Abbildung der von einem Streuvoxel stammenden Streustrahlung auf einer größeren Länge des Detektorelements erfasst werden, da diese eine über einen größeren Raumwinkel sich erstreckende Empfindlichkeit aufweist. Wenn eine lineare Erstreckung des Detektorelements entlang der Y-Richtung erfolgt, damit ein größerer Raumwinkel durch das Detektorelement erfasst wird, ist dies nur in sehr beschränktem Umfang möglich, da das Beugungsprofil umso unschärfer wird, je weiter man sich von der Z-Achse entfernt.

Eine vorteilhafte Weiterbildung der Erfindung sieht vor, dass die Detektorelemente auf einer Ellipse mit der Hauptachse entlang der Y-Achse liegen. Auf Grund der Abbildungsgeometrie erfolgt die Abbildung der von einem Streuvoxel stammenden elastisch gestreuten Röntgenquanten auf einer gekrümmten Linie in der YZ-Ebene, die sich entlang einer Ellipse erstreckt. Somit wird die Empfindlichkeit des Detektors über einen noch größeren Raumwinkel gewährleistet.

Eine weitere vorteilhafte Weiterbildung der Erfindung sieht vor, dass die Detektorelemente eine Form gemäß der Gleichung a₁² Z² + a₂² Y² = a₃² haben und a₁, a₂ und a₃ Konstanten sind, die von der Geometrie des Streukollimators und des zu untersuchenden Bereichs des Objekts abhängen. Durch die drei auf die jeweilige Detektorgeometrie abgestimmten Konstanten wird eine optimale Detektorempfindlichkeit über einen großen Raumwinkel erreicht, ohne dass die oben beschriebenen Unschärfeeffekte auftreten.

Eine weitere vorteilhafte Weiterbildung der Erfindung sieht vor, dass die Länge der Detektorelemente in Y-Richtung zwischen 40 und 70 mm, insbesondere 60 mm, beträgt und/oder sie eine Breite in Z-Richtung von 0,25 bis 2 mm, insbesondere 0,5 mm, aufweisen. Dadurch wird eine starke Erhöhung der Detektorempfindlichkeit erreicht, die im Bereich eines Faktors 10 gegenüber den bekannten Detektoren liegt.

Eine weitere vorteilhafte Weiterbildung der Erfindung sieht vor, dass die Detektorelemente symmetrisch zur Z-Achse ausgebildet sind. Dies ist auf Grund der geometrischen Ausgestaltung der Anordnung die optimale Form, um eine möglichst hohe Detektorempfindlichkeit sowohl zur Linken als auch zur Rechten der Z-Achse zu erzielen. Bevorzugt sind die Detektorelemente aus Germanium hergestellt, insbesondere mittels eines Lithographieverfahrens.

Eine weitere vorteilhafte Weiterbildung der Erfindung sieht vor, dass ein weiterer Satz von Detektorelementen symmetrisch zur Y-Achse angeordnet ist. Dadurch wird ein noch besseres Signal-Rausch-Verhältnis erhalten.

Weitere vorteilhafte Weiterbildungen der Erfindung sind Gegenstand der Unteransprüche. Eine vorteilhafte Ausgestaltung der Erfindung wird anhand des in den Figuren dargestellten Ausführungsbeispiels erläutert. Hierbei zeigen:
- Fig. 1: eine schematische Ansicht einer erfindungsgemäßen Anordnung ohne Streukollimator und
- Fig. 2: die bevorzugte Form eines Detektorelements in der YZ-Ebene.

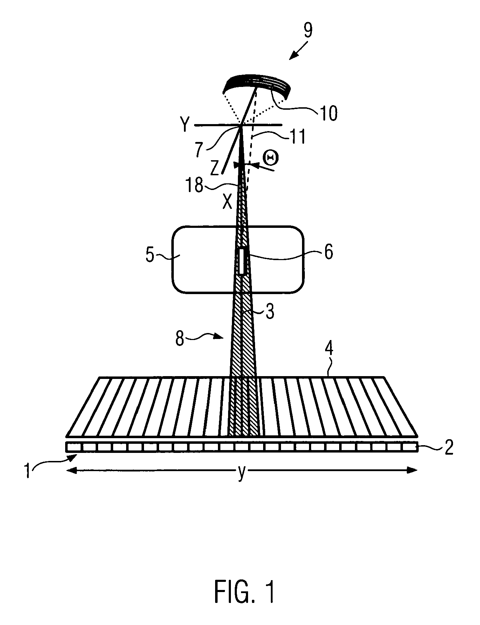

In Fig. 1 ist schematisch ein Ausführungsbeispiel einer erfindungsgemäßen Anordnung dargestellt. Es handelt sich hierbei um einen Schnitt entlang der XY-Ebene. Allerdings ist die erfindungsgemäße Anordnung im oberen Bereich, d.h. im Bereich der YZ-Ebene, perspektivisch dargestellt.

Die erfindungsgemäße Anordnung weist eine sich in Y-Richtung erstreckende Anode 1 auf, die eine Reihe von aneinander gereihten diskreten Fokuspunkten 2 aufweist, die beim Beschuss mit einem Elektronenstrahl entlang der Anode 1 wandern. Bevorzugt wird dabei eine Anzahl von Fokuspunkten 2 im Bereich von 60 (dargestellt sind aus Gründen der Übersichtlichkeit lediglich eine geringe Anzahl dieser Fokuspunkte 2). Die von jedem einzelnen Fokuspunkt 2 ausgehenden Röntgenquanten werden durch einen Primärkollimator 4, der eine Fächerform aufweist, so begrenzt, dass sich ein inverser Fächerstrahl 8 an Röntgenquanten als Primärstrahl 3 ergibt. Dieser inverse Fächerstrahl 8 verläuft in der XY-Ebene und konvergiert auf einen einzigen Fokalpunkt 7, der gleichzeitig den Koordinatenursprung eines kartesischen Koordinatensystems bildet. Der Primärstrahl 3 trifft im Objektraum auf ein Objekt 5. Bei dem Objekt 5 handelt es sich, wenn man vom häufigsten Anwendungsfall der erfindungsgemäßen Anordnung in Form einer Gepäckprüfanlage ausgeht, um einen Koffer. Dieses Objekt 5 liegt dann auf einem Förderband (nicht gezeigt), welches sich entlang der Z-Achse bewegen lässt. Solange das Objekt 5 nicht entlang der Z-Achse durch das Förderband bewegt wird, durchsetzt der inverse Fächerstrahl 8 das Objekt 5 entlang einer dünnen Scheibe in der XY-Ebene. Diese Scheibe wird dadurch verändert, dass eine eindimensionale Bewegung des Förderbands in Z-Richtung erfolgt, so dass ein vollständiger Scanvorgang des Objekts 5 durch die Bewegung des Förderbands erfolgen kann.

Die momentan gescannte dünne Scheibe besteht aus einer Anzahl von Streuvoxeln 6, die jeweils eine X-Koordinate (unterschiedliche Tiefe entlang der X-Richtung) und eine Y-Koordinate (unterschiedliche seitliche Anordnung bezüglich der X-Achse) aufweisen. An jedem einzelnen Streuvoxel 6 wird der Primärstrahl 3 von Röntgenquanten gestreut. Von den an diesem Streuvoxel 6 gestreuten Röntgenquanten interessieren im Rahmen der vorliegenden Erfindung lediglich die kohärent gestreuten Röntgenquanten. Diese werden mittels eines nicht dargestellten - aus der EP 1 241 470 B1 bekannten - Streukollimatorsystems in die YZ-Ebene abgebildet, so dass aus ihrer Position entlang der Z-Achse eine direkte Zuordnung zur Tiefe des Streuvoxels 6 entlang der X-Richtung im Objekt 5 erfolgt. Dies bedeutet, dass als Streustrahl 11 lediglich solche am Streuvoxel 6 gestreuten Röntgenquanten vom Streukollimatorsystem durchgelassen werden, die einen vorgegebenen konstanten Streuwinkel Θ aufweisen. Der durchgelassene Streustrahl 11 ist in Fig. 1 gestrichelt dargestellt.

Auf Grund des um die Z-Richtung ringförmig ausgebildeten Streukollimatorsystems gelangen nicht nur Streuquanten in der XZ-Ebene durch dieses hindurch sondern auch solche, die eine von Y=0 verschiedene Koordinate aufweisen. Diese werden von einem in der YZ-Ebene angeordneten zweidimensionalen Detektor 9 erfasst. Die aus der EP 1 241 470 B1 bekannte Detektoranordnung erstreckt sich lediglich entlang der Z-Achse, dagegen erstrecken sich die einzelnen erfindungsgemäßen Detektorelemente 10 in Y-Richtung. Dadurch können mehr Streuquanten des vom Streuvoxel 6 stammenden Streustrahls 11, die durch das Streukollimatorsystem durchgelassen werden und zu dem festen Streuwinkel Θ gehören, vom Detektor 9 erfasst werden. Je mehr Streuquanten erfasst werden, desto weniger Zeit wird benötigt, um das Impulsübertragungsspektrum der elastisch gestreuten Röntgenquanten aufzunehmen.

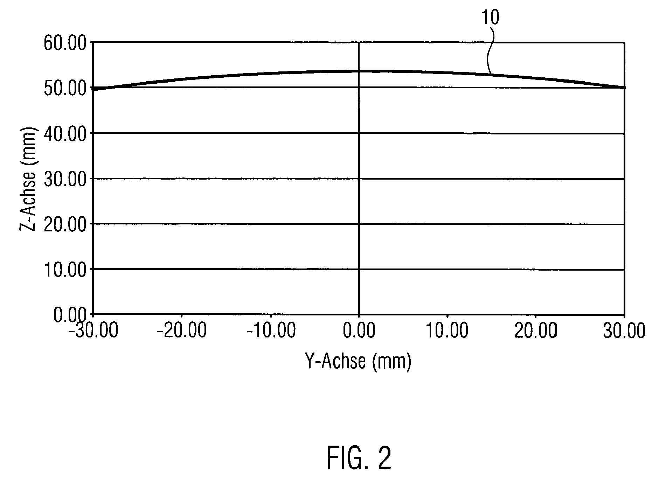

Durch die Erstreckung des Detektors 9 in Y-Richtung wird die Detektorempfindlichkeit auf einen größeren Raumwinkel ausgedehnt. Allerdings ergibt sich bei einer linearen Ausdehnung der Detektorelemente 10 parallel zur Y-Achse ein Unschärfeeffekt des Beugungsprofils, dessen Grad stark vom Streuwinkel Θ abhängt. Dies folgt daraus, dass der gemessene Streuwinkel umso stärker vom eingestellten Streuwinkel Θ bezüglich der XZ-Ebene abweicht, je weiter sich das Detektorelement 10 von der Z-Achse entfernt. Um diesen Unschärfeeffekt zu unterbinden, werden Detektorelemente 10 verwendet, die gebogen ausgeführt sind. Deren geometrische Ausgestaltung ist in Fig. 2 dargestellt, wobei die besonders bevorzugten Längenangaben dort in Millimeter angegeben sind. Jedes Detektorelement 10 ist symmetrisch zur Z-Achse ausgebildet und weist die Form eines Ellipsenausschnitts gemäß der Formel a₁² Z² + a₂²Y² = a₃² auf, wobei a₁, a₂ und a₃ Konstanten sind, die von der Geometrie des Streukollimators und des Objektraums abhängen. Im dargestellten Beispiel erstreckt sich ein Detektorelement 10 über eine Länge von 60 mm in Y-Richtung. Der Abstand des dargestellten Detektorelements 10 von der Y-Achse in Z-Richtung variiert zwischen knapp 50 mm an seinen äußeren Enden und 53 mm im Zentrum an der Z-Achse. Die Ausdehnung des Detektorelements 10 in Y-Richtung ist somit ungefähr um einen Faktor 6 größer als derjenige der aus dem Stand der Technik bekannten Detektorelemente. Dadurch wird die Detektorempfindlichkeit um ungefähr denselben Faktor 6 gegenüber dem Stand der Technik erhöht, ohne dass der Nachteil einer verminderten Auflösung auf Grund des Unschärfeeffekts des Beugungsprofils auftritt.

Die erfindungsgemäßen Detektoren 9, die eine elliptische Form aufweisen, können durch ein Standardlithographieverfahren aus Germanium oder einem anderen Halbleitermaterial hergestellt werden. Um ein noch besseres Signal-Rausch-Verhältnis zu erhalten, kann ein weiterer Satz Detektorelemente 10 auch spiegel-symmetrisch zur Y-Achse angeordnet sein.

Zusammenfassend kann gesagt werden, dass durch die erfindungsgemäße Anordnung mit einem erfindungsgemäßen Detektorarray aus Detektorelementen 10 auf einer elliptischen Kurve die Detektorempfindlichkeit über einen weit größeren Raumwinkel gesteigert werden kann, ohne dass die spektrale Auflösung des Beugungsprofils verringert wird. Durch die Verwendung der Anode 1 mit einer großen Anzahl von Fokuspunkten 2 kann eine hohe Gleichstromlast der Röntgenquelle erzielt werden. Darüber hinaus wird auf Grund der erfindungsgemäßen Anordnung eine mechanische Verschiebung - inklusive des Detektors 9 - vermieden und werden partielle Volumenartefakte mit verkleinerten Voxelvolumen vermindert. Zudem wird auf Grund der einfachen Korrelation der Datensets aus zwei symmetrisch zur Y-Achse angeordneten Detektoren 9 (der zweite Detektor 9 ist aus Übersichtlichkeitsgründen weggelassen) eine hohe Scangeschwindigkeit von Objekten 5 möglich. Für einen normalen Koffer sind Scanzeiten unter sechs Sekunden problemlos erreichbar.

### Bezugszeichenliste

- 1: Anode
- 2: Fokuspunkt
- 3: Primärstrahl
- 4: Primärkollimator
- 5: Objekt
- 6: Streuvoxel
- 7: Fokalpunkt
- 8: Inverser Fächerstrahl
- 9: Detektor
- 10: Detektorelement
- 11: Streustrahl
- Θ: Streuwinkel

## Patentansprüche

1. Anordnung zum Messen des Impulsübertragungsspektrums von elastisch gestreuten Röntgenquanten
mit einem in Y-Richtung ausgedehnten Fokus als Anode (1), der Röntgenstrahlung in X-Richtung emittiert;
mit einem in Y-Richtung sich erstreckenden Primärkollimator (4), der nur Röntgenquanten durchlässt, die auf einen einzigen Fokalpunkt (7) gerichtet sind und der Fokalpunkt (7) Ursprungspunkt eines kartesischen Koordinatensystems ist;
mit einem Untersuchungsbereich;
mit einem um die Z-Richtung ringförmig ausgebildeten Streukollimatorsystem, das zwischen dem Untersuchungsbereich und dem Fokalpunkt (7) angeordnet ist und der nur Streustrahlung (11) von einem in den Untersuchungsbereich einbringbaren Objekt (5) durchlässt, die unter einem festen Streuwinkel (Θ) emittiert wird;
und mit einem Detektor (9);
wobei die X-Komponenete eines Streuvoxels (6) des Objekts (5) eindeutig auf die Z-Komponente des Detektors (9) abgebildet wird;
**dadurch gekennzeichnet, dass**
sich der Detektor (9) in der YZ-Ebene befindet, einen Abstand zur Z-Achse aufweist und jedes Detektorelement (10) gekrümmt ausgebildet ist.

2. Anordnung nach Anspruch 1, **dadurch gekennzeichnet, dass** die Detektorelemente (10) auf einer Ellipse mit der Hauptachse entlang der Y-Achse liegen.

3. Anordnung nach einem der vorhergehenden Ansprüche, **dadurch gekennzeichnet, dass** die Detektorelemente (10) eine Form gemäß der Gleichung a₁² Z² + a₂² Y² = a₃² haben und a₁, a₂ und a₃ Konstanten sind, die von der Geometrie des Streukollimators und des zu untersuchenden Bereichs des Objekts (5) abhängen.

4. Anordnung nach einem der vorhergehenden Ansprüche, **dadurch gekennzeichnet, dass** die Länge der Detektorelemente (10) in Y-Richtung zwischen 40 und 70 mm, insbesondere 60 mm, beträgt.

5. Anordnung nach einem der vorhergehenden Ansprüche, **dadurch gekennzeichnet, dass** die Detektorelemente (10) symmetrisch zur Z-Achse ausgebildet sind.

6. Anordnung nach einem der vorhergehenden Ansprüche, **dadurch gekennzeichnet, dass** die Detektorelemente (10) eine Breite in Z-Richtung von 0,25 bis 2 mm, insbesondere 0,5 mm, haben.

7. Anordnung nach einem der vorhergehenden Ansprüche, **dadurch gekennzeichnet, dass** die Detektorelemente (10) aus Germanium hergestellt sind, insbesondere durch ein Lithographieverfahren.

8. Anordnung nach einem der vorhergehenden Ansprüche, **dadurch gekennzeichnet, dass** ein weiterer Satz von Detektorelementen (10) symmetrisch zur Y-Achse angeordnet ist.
